# EUROPÄISCHE PATENTSCHRIFT

(11) **EP 3 233 423 B1**
(45) Veröffentlichungstag und Bekanntmachung des Hinweises auf die Patenterteilung: **17.04.2019**
(21) Anmeldenummer: 15807597.8
(22) Anmeldetag: 18.11.2015
(51) Int. Cl.: C08K 3/30, C01G 9/08, B41M 5/26, C08K 9/02

(54) **LASERMARKIERBARE UND LASERSCHWEISSBARE POLYMERE MATERIALIEN**
LASER-MARKABLE AND LASER-WELDABLE POLYMER MATERIALS
MATÉRIAUX POLYMÈRES POUVANT ÊTRE MARQUÉS ET SOUDÉS AU LASER

(30) Priorität: 17.12.2014 DE 102014018586
(43) Veröffentlichungstag der Anmeldung: 25.10.2017
(73) Patentinhaber: Merck Patent GmbH, 64293 Darmstadt (DE)
(72) Erfinder: RUEGER, Reinhold, 63322 Roedermark (DE); QUITTMANN, Ulrich, 65439 Floersheim (DE); ROSENBERGER, Silvia, 55294 Bodenheim (DE)
(86) Internationale Anmeldenummer: PCT/EP2015/002307
(87) Internationale Veröffentlichungsnummer: WO 2016/096072

(56) Entgegenhaltungen:
- EP-A2- 0 415 477
- US-A1- 2005 095 408

## Beschreibung

Die vorliegende Erfindung betrifft lasermarkierbare und laserschweißbare polymere Materialien, die sich dadurch auszeichnen, dass sie als Absorber mindestens ein mit Kupfer dotiertes Zinksulfid enthalten.

Die Kennzeichnung von Produktionsgütern wird in fast allen Industriezweigen zunehmend wichtiger. So müssen häufig z. B. Produktionsdaten, Chargennummern, Verfallsdaten, Barcodes, 2D-Codes, Firmenlogos, Seriennummern, auf Kunststoffteilen aufgebracht werden. Wachsende Bedeutung gewinnt dabei die berührungslose, sehr schnelle und flexible Markierung mit Lasern. Mit dieser Technik ist es möglich Beschriftungen mit hoher Geschwindigkeit auch auf eine nicht plane Oberfläche aufzubringen. Da sich die Beschriftung im Kunststoffkörper selbst befindet, ist sie dauerhaft abriebbeständig.

Da viele Kunststoffe für Laserlicht durchlässig sind, werden den Kunststoffen meist lasersensitive Mittel zugesetzt, die durch Absorption der Laserenergie im Kunststoffmaterial entweder direkt durch Wechselwirkung mit dem Polymer oder indirekt mit einem zugesetzten Material eine lokale, gut sichtbare Verfärbung hervorrufen. Das lasersensitive Mittel kann ein organischer Farbstoff oder ein Pigment sein, welches das Laserlicht absorbiert. Für die Verfärbung kann es verschiedene Ursachen geben, z. B. die Zersetzung des Polymeren oder der Absorber selbst wird von einer unsichtbaren in eine sichtbare Form umgewandelt. In der Regel kommt es zu einer Dunkelfärbung des Kunststoffs durch Karbonisierung in Folge der eingetragenen Laserenergie.

Es sind zahlreiche Additive für die Lasermarkierung von Kunststoffen bekannt. Für die Markierung mit Nd-YAG-Lasern (Neodym-dotierte Yttrium-Aluminium-Granat-Laser), YVO₄-Lasern (Yttrium-Vanadat-Laser) und 1064 nm-Faserlasern eignen sich vorzugsweise Materialien, die Licht der Wellenlänge 1064 nm absorbieren und selbst nur eine geringe Eigenfarbe aufweisen. Beispiele sind Kupferphosphate, Bismutoxid, Bismutoxichlorid, mit Antimon dotiertes Zinnoxid auf Glimmer oder Metalle. In der EP 1 377 522 A2 werden Additive für die Lasermarkierung von Kunststoffen beschrieben, die aus einem kalziniertem Antimon-Zinn-Mischoxid bestehen, in welchem die Antimonkonzentration an der Oberfläche höher ist als in den Teilchen als Ganzes. Die Teilchengröße beträgt 0,1- 10 µm, vorzugsweise 0,5 -5 µm. Mit dem Additiv werden in der überwiegenden Zahl der Polymere dunkle Lasermarkierungen erhalten. Diese eignen sich z.B. für die Markierung von hellen Kunststoffen. Helle Markierungen, wie sie in der Regel für die Markierung von dunklen Kunststoffen benötigt werden, werden mit diesem Laseradditiv nicht erhalten.

Von Nachteil ist, dass auf bunten oder dunkel eingefärbten Kunststoffteilen dunkle Lasermarkierungen nur sehr schwer zu erkennen sind. Beispiele für dunkle oder bunte Kunststoffteile sind Kabelisolierungen, Tastaturen oder dunkel gefärbte Kunststoffrohre. Hier ist eine helle, möglichst weiße Beschriftung gewünscht, weil diese vor dem dunklen Hintergrund wesentlich kontrastreicher erscheint als eine graue oder schwarze Markierung. Helle Markierungen können durch Aufschäumen von Kunststoffen mittels Laserbestrahlung erzeugt werden. Dies ist aber auf wenige Polymertypen beschränkt und führt zu einer starken Veränderung der Oberfläche durch die Schaumbildung. Die mechanische Festigkeit der Oberfläche wird damit vermindert.

Aus der WO 2011/085779 A1 sind Materialien und ein Verfahren zur Erzeugung einer hellen Lasermarkierung bekannt. Dabei werden Partikel eingesetzt, die aus einem weißen Kern und einer vorzugsweise schwarzen oder grauen Hülle bestehen, wobei letztere sich durch Laserbestrahlung entfärben lässt. Die dunkle Hülle enthält Kohlenstoff, z. B. in Form von Ruß. Die in der WO 2011/085779 A1 beschriebenen Materialien haben alle den Nachteil, dass sie dunkelgrau bis schwarz sind und damit die farbliche Gestaltung der Kunststoffteile wesentlich eingeschränkt ist. Insbesondere rote, blaue und grüne Farbtöne sind damit nicht oder nur eingeschränkt machbar.

Es besteht daher weiterhin ein Bedarf an Laseradditiven, die insbesondere auf farbigen oder dunklen Untergründen durch Laserbeschuss zu einer hellen bis weißen Markierung führen, welche dauerhaft ist und auch unter mechanischer Belastung über einen langen Zeitraum erhalten bleibt.

Aufgabe der vorliegenden Erfindung ist es daher ein Verfahren zur Erzeugung von kontrastreichen und mechanisch stabilen hellen Markierungen auf Kunststoffgegenständen, vorzugsweise bunten oder dunklen Kunststoffgegenständen, zu finden. Eine weitere Aufgabe der Erfindung besteht darin, ein Additiv für die Lasermarkierung bereit zu stellen, das keine oder nur eine geringe Eigenfarbe aufweist, das unter Einwirkung von Laserlicht im damit dotierten Polymer sehr gute Markierergebnisse, insbesondere kontrastreiche und scharfe helle Markierungen, vorzugsweise auf buntem oder dunklem Grund, liefert und in einer breiten Palette von Kunststoffen eingesetzt werden kann.

Eine weitere Aufgabe der vorliegenden Erfindung ist es, ein Verfahren zur Herstellung eines solchen Laseradditivs zur Verfügung zu stellen.

Überraschenderweise wurde gefunden, dass gefärbte Kunststoffgegenstände und Polymerschichten sich durch Laserbeschuss hell markieren lassen, wenn der Kunststoff bzw. das Polymer mit Kupfer dotiertes Zinksulfid enthält.

Gegenstand der Erfindung sind daher lasermarkierbare und/oder laserschweißbare Polymere gemäß Anspruch 1, dadurch gekennzeichnet, dass sie als Absorber mindestens ein mit Kupfer dotiertes Zinksulfid enthalten.

Für die Wirkung des dotierten Zinksulfids als Laseradditiv für eine helle Lasermarkierung ist insbesondere die Dotierung des Zinksulfids mit Kupfer von Bedeutung. Der Gehalt an Kupfer im Zinksulfid in der vorliegenden Erfindung beträgt 0,5 - 15 Mol % Cu, insbesondere 1 - 6 Mol %, bezogen auf die Summe aus Zinksulfid und Kupfersulfid.

Weiterhin kann auch die spezifische Oberfläche des mit Cu dotierten Zinksulfids das Markierergebnis beeinflussen. Vorzugsweise ist die BET-Oberfläche des Zinksulfids > 5 m²/g, insbesondere > 7 m²/g. Die BET-Oberfläche wird bestimmt durch Messung der Stickstoffabsorption nach Brunnauer, Emmett und Teller gemäß DIN ISO 9277:2003-05.

Weiterhin kann auch die Teilchengröße des Zinksulfids das Markierungsergebnis beeinflussen. Kontrastreiche helle Markierungen mit hoher Kantenschärfe werden vorzugsweise dann erhalten, wenn die Teilchengröße der Partikel 20 - 1000 nm, insbesondere 50 - 500 nm, ist. Besonders bevorzugt sind Teilchengrößen von 80 - 400 nm. Die Teilchengröße wird in dieser Anmeldung mittels Laserbeugung (Malvern) bestimmt.

Aus der US 2005/095408 A1 ist ein lasermarkierendes Additiv bekannt, wobei es sich um eine Mischung aus Zinksulfid und Kupferkaliumjodid (CuKl₃) oder Kupferjodid (Cul) handelt.

Mit Kupfersulfid beschichtetes Zinksulfid ist beispielsweise aus der DE 39 29 056 A1 bekannt. In dieser Patentanmeldung werden elektrisch leitfähige Pulver offenbart, die aus Zinksulfid bestehen, das mit Kupfersulfid beschichtet ist. Die elektrisch leitfähigen Pulver aus der DE 39 29 056 A1 mit einer Teilchengröße von 0,3 - 5 µm bestehen im Kern aus Zinksulfid und besitzen Pigmentqualität, d.h. eine Reinheit von mindestens 97 %. Durch den Kern aus Zinksulfid wird die nahezu schwarze Farbe des Kupfersulfids auf ein helles Olivgrün aufgehellt. Der Gewichtsanteil des Kupfersulfids im elektrisch leitfähigen Pulver beträgt 2 bis 30 Gew.%, wobei ein Anteil von 6 bis 18 Gew.% bevorzugt ist. Nur in diesem Bereich werden hellere Pigmente mit ausreichender elektrischer Leitfähigkeit erhalten. Weiterhin sind kupferdotierte Zinksulfide mit geringen Kupfergehalten von weniger als 1 Mol-% Cu bezogen auf Zinksulfid und größeren Teilchen (> 1 µm, vorzugsweise > 10 µm) als grüne Leuchtstoffe (Phosphoreszenz, Elektrolumineszenz) bekannt. Feinteilige zinksulfidische Luminophore mit Kupferdotierung sind z. B. in der DE 19953924 A1 und dem dort zitierten Stand der Technik beschrieben.

Wesentliche Merkmale für die Eignung der erfindungsgemäßen Zinksulfid-Pigmente sind die geringe Eigenfarbe und das geringe Deckvermögen in den Kunststoffanwendungen. Um helle Markierungen mit hoher Kantenschärfe zu erhalten, ist es häufig zusätzlich von Vorteil, wenn die spezifische Oberfläche der kupferhaltigen Zinksulfid-Pigmente 5 m²/g (BET) oder mehr, vorzugsweise 7 - 40 m²/g beträgt. Pigmente mit spezifischen Oberflächen von 7 m²/g und mehr zeigen in der Anwendung eine höhere Transparenz als solche mit geringerer spezifischer Oberfläche.

Als Ausgangsmaterial können alle dem Fachmann bekannten Zinksulfide verwendet werden. Zinksulfid ist kommerziell erhältlich, u.a. mit dem Handelsnamen Sachtolite von der Fa. Sachtleben.

Besonders bevorzugt als Ausgangsmaterialien sind transparente feinteilige Zinksulfide, d.h. Zinksulfidteilchen mit einer D₅₀ < 1000 nm, beispielsweise bekannt aus der WO 2008/065208 A1. Diese können entweder direkt bei der Herstellung oder auch in einem separaten Verarbeitungsschritt mit Kupfersulfid modifiziert werden.

Neben den hervorragenden optischen Eigenschaften, Kontrast und Kantenschärfe, ermöglicht das mit Kupfer dotierte Zinksulfid schnelle Markierungen mit hohen Pulsraten und verfügt über ein großes Prozessfenster bezogen auf die Parameter-Lasereinstellungen. Über die Einstellung der Laserparameter lässt sich darüber hinaus die Helligkeit der Markierung bis hin zu dunklen Markierungen gezielt steuern. Allein über die Steuerung der Laserparameter sind detailreiche Halbtonbilder zugänglich. Das Verfahren zur Bilderzeugung ist ebenfalls Gegenstand der Erfindung.

Der Kupfergehalt der Pigmente beträgt vorzugsweise 0,5 - 15 Mol-% bezogen auf die Summe von Kupfersulfid und Zinksulfid, insbesondere 2 - 10 Mol-%. Anders als bei den leitfähigen Pigmenten aus der DE 39 29 056 A1 ist es nicht erforderlich, dass eine geschlossene äußere Beschichtung aus Kupfersulfid auf den Zinksulfid-Partikeln besteht. Vielmehr genügt bei den erfindungsgemäßen Pigmenten für die helle Lasermarkierung bereits ein geringer Anteil an Kupfersulfid, um eine ausreichende Absorption des Laserlichts zu ermöglichen. Aus dem Grund können auch sehr feinteilige Zinksulfide (D₅₀ ≤ 1000 nm) mit geringen Kupfergehalten eingesetzt werden, was bei den elektrisch leitfähigen Materialien nicht ohne Verlust der Leitfähigkeit möglich ist. Auch sind wegen der geringen erforderlichen Kupfergehalte deutlich hellere Pigmente machbar. Bevorzugt sind Kupfersulfid-Anteile von weniger als 10 Mol-%, insbesondere ≤ 5 Mol-%.

Optional kann der Kupfersulfid-Anteil im Pigment auch über das Pigmentpartikel homogen verteilt sein oder sich in Schichtform unterhalb der Oberfläche der Pigmentpartikel befinden. Zum Beispiel können die Partikel im Anschluss an eine Kupfersulfid-Beschichtung noch mit einer weiteren Zinksulfid-Schicht versehen werden. Damit kann die Farbe weiter aufgehellt werden. Auch eine organische Nachbeschichtung ist möglich. Bei der organischen Nachbeschichtung handelt es sich vorzugsweise um eine Beschichtung mit einem oder mehreren monomeren oder oligomeren Organosilan, wie sie beispielsweise in der WO 2004/092284 A1 beschrieben sind. Alternativ zu den Silanen kommen auch Beschichtungen mit höheren Carbonsäuren, z. B. Stearinsäuren, in Frage.

Neben trägerfreiem Zinksulfid können auch mit Zinksulfid beschichtete feinteilige anorganische Trägermaterialien, z.B. mit Zinksulfid beschichtetes Bariumsulfat, mit Kupfer dotiert werden, wobei die Dotierung die Zinksulfidbeschichtung betrifft. Die Trägermaterialien haben vorzugsweise Teilchengrößen von 20 - 1000 nm, insbesondere 50 - 500 nm und ganz besonders bevorzugt Teilchengrößen von 80 - 400 nm. Geeignete Trägermaterialien sind ebenfalls in Pigmentqualität erhältlich, z. B. unter dem Handelsnamen Lithopone 30 L oder Lithopone 60 L von der Firma Sachtleben. Der Gehalt an Zinksulfid in diesen Pigmenten beträgt 30 Gew.% bzw. 60 Gew.% bezogen auf die Pigmente. Der Gehalt an Kupfer im Zinksulfid dieser Ausführungsform mit kupferdotiertem Zinksulfid auf einem Substrat beträgt vorzugsweise 1 - 30 Mol-% Cu, insbesondere 2 - 10 Mol-%, bezogen auf die Summe aus Zinksulfid und Kupfersulfid.

Die Herstellung der erfindungsgemäßen Pigmente ist relativ einfach. Für die Umsetzung werden die unterschiedlichen Löslichkeiten von Zinksulfid und Kupfersulfid (Löslichkeitsprodukte: pKL (ZnS) = 21,7; pKL (CuS) = 40,2) genutzt. Durch lonenaustausch wird Kupfersulfid auf dem Zinksulfid abgeschieden. Demgemäß besteht das Verfahren zur Herstellung der erfindungsgemäßen Zinksulfid-Pigmente vorzugsweise darin, dass man eine wässrige Lösung oder Suspension eines Kupfersalzes vom pH-Wert 3 bis 11 und Zinksulfid-Teilchen unter lebhaftem Rühren vereinigt und die durch die Umfällung mit Kupfersulfid versehenen Zinksulfid-Teilchen abtrennt und aufarbeitet.

In einer bevorzugten Ausführungsform kann von Zinksulfid in Pigmentqualität ausgegangen werden, das bereits über eine chemische Reinheit verfügt. Solche Pigmente sind im Handel erhältlich, z. B. unter dem Handelsnamen Sachtolite von Sachtleben. Diese werden in wässriger Suspension mit einem löslichen Kupfersalz versetzt, wodurch das schwerer lösliche Kupfersulfid abgeschieden wird und die leichter löslichen Zink-Ionen in Lösung gehen. Das erhaltene Produkt wird abfiltriert, gewaschen, getrocknet und anschließend pulverisiert. Optional kann das Produkt auch in eine Zubereitung überführt werden, z. B. in eine Mischung mit einem inerten Verdünner wie Aerosil, Talk, MgO oder Kieselgel oder in ein Masterbatch mit einem Kunststoff.

Als Kupfersalze, die im Reaktionsmedium leichter löslich sind als Kupfersulfid, werden vorteilhaft Kupfer(II)-salze eingesetzt. Insbesondere eignen sich Kupfer(II)-salze von Mineralsäuren, beispielsweise deren Nitrate, Chloride, Sulfate. Kupfer(II)-sulfat wird bevorzugt eingesetzt. Aber auch Kupfer(I)-Verbindungen können eingesetzt werden, z. B. CuCI.

Es ist für das Verfahren nicht kritisch, ob das Zinksulfid als solches oder als wässrige Suspension in die wässrige Lösung des Kupfersalzes eingetragen wird, oder ob eine wässrige Lösung von Kupfersalz in eine Zinksulfid-Suspension eingetragen wird.

Die für das Verfahren der Erfindung eingehaltene Temperatur liegt vorzugsweise im Bereich von 20 - 100 °C; ein Arbeiten bei erhöhter (> 40 °C) Temperatur beschleunigt jedoch die Reaktionsgeschwindigkeit erheblich. Zur Erzielung einer gleichmäßigen, fest haftenden Beschichtung wird vorzugsweise zu Beginn der Umsetzung bei Raumtemperatur gearbeitet und die Reaktionsmischung im weiteren Verlauf auf 50 - 80 °C erhöht.

Um eine Auflösung des Zinksulfids durch Basen oder Säuren und ggf. die Freisetzung von Schwefelwasserstoff zu verhindern, wird der pH-Wert des Reaktionsmediums vorzugsweise im Bereich von 3 - 11 eingestellt.

Das Kupfersulfid kann aber auch bereits bei der Herstellung des Zinksulfids mitgefällt oder aufgebracht werden, sodass direkt mit Kupfer dotiertes Zinksulfid erhalten wird und die nachträgliche Umsetzung entfällt.

Die Kombination Kupfersulfid und Zinksulfid wirkt sich in mehrfacher Hinsicht vorteilhaft aus. Das enthaltene Kupfersulfid bewirkt eine signifikante Absorption des Laserlichtes, auch bei sehr kleinen Teilchen. Dadurch sind die Pigmente schon in sehr geringer Konzentration als Additiv für die Lasermarkierung wirksam. Die hohe spezifische Oberfläche begünstigt die Ausbildung einer hellen Markierung. Wegen der geringen Kupfersulfid-Gehalte bleibt die Gitterstruktur des Zinksulfids bestehen und damit bleiben auch die günstigen anwendungstechnischen Eigenschaften der Zinksulfid-Pigmente, wie z.B. enge Partikelgrößenverteilung, gute Dispergierbarkeit, geringe Abrasivität, Helligkeit und Transparenz erhalten. Von Vorteil ist weiterhin, dass das finale Laseradditiv sehr preiswert ist, sowohl was die Ausgangsmaterialien betrifft als auch in der Herstellung.

Zudem treten Nachteile, wie sie häufig bei bekannten Kupferverbindungen, wie z.B. Kupferpyrophosphat oder Kupferhydroxidphosphat, bei der Verarbeitung in Kunststoffen beobachtet werden, z.B. Abbau des Kunststoffs, Dunkelfärbung der Kunststoffartikel unter Einwirkung von Ammoniak oder Schwefelwasserstoff oder die Verkupferung der Metallwerkzeuge in den Knetern und Extrudern, bei den erfindungsgemäßen Laseradditiven nicht auf.

Die Einbringung des Laseradditivs in den Kunststoff oder das Polymer kann analog zu den industrieüblichen Verfahren erfolgen, z.B. als trockene Pigmentmischung, als flüssige Präparation oder Paste oder über ein Konzentrat auf Kunststoff- oder Wachsbasis, ein sogenanntes Masterbatch. Auch die Einbringung der laseraktiven Pigmente über die Extrusion eines Compounds ist möglich. Dieses unterscheidet sich zum Masterbatch dadurch, dass es in der folgenden Verarbeitung ohne weitere Verdünnung eingesetzt wird, da es die gewünschten Additive bereits in der Endkonzentration im gewünschten Kunststoff enthält. Neben den laseraktiven Pigmenten können dabei bei allen genannten Additivierungsverfahren auch farbgebende Pigmente und weitere Zuschlagsstoffe zugegeben werden.

In der vorteilhaften Ausführungsform wird zunächst ein Masterbatch des Kunststoffs mit einer höheren Konzentration des kupferdotierten Zinksulfid hergestellt und dieser dann als Granulat in geringer Menge der Hauptmasse des Kunststoffes bei der Kunststoffverarbeitung zugesetzt.

Ferner können den Polymeren Farbmittel zugesetzt werden, die eine breite farbliche Variation zulassen, besonders in den Farben Rot, Grün und Blau. Geeignete Farbmittel sind insbesondere organische Pigmente und Farbstoffe.

Als polymere Materialien können insbesondere alle bekannten Kunststoffe, insbesondere Thermoplasten, ferner Duroplasten und Elastomere, geeignet, die z.B. im Ullmann, Bd. 15, S. 457 ff., Verlag VCH beschrieben werden, für die Lasermarkierung Anwendung finden. Geeignete thermoplastische Polymere sind z.B. Polyethylen, Polypropylen, Polyamide, Polyester, Polyetherester, Polyphenylenether, Polyacetal, Polybutylenterephthalat (PBT), Polyethylenterephthalat (PET), Polymethylmethacrylat, Polyvinylacetal, Polystyrol, Acrylnitril-Butadien-Styrol (ABS), Acrylnitril-Styrol-Acrylester (ASA), Styrol-Acrylnitril (SAN), Polycarbonat, Polyether-sulfone und Polyetherketone sowie deren Copolymeren, Mischungen, und/oder Polymerblends, wie z.B. PC/ABS, MABS.

Geeignete duroplastische Polymere sind z.B. Polyurethan, Melaminharze, Polyester und Epoxydharze.

Die Einarbeitung des kupferdotierten Zinksulfids kann z.B. durch Compoundierung, über ein Masterbatch, über Pasten oder durch die direkte Zugabe beim formgebenden Verarbeitungsschritt (Direktpigmentierung) erfolgen. Dem Polymeren, vorzugsweise einem Kunststoffgranulat, können bei der Einarbeitung des Absorbers gegebenenfalls weitere Additive wie Prozesshilfsmittel, Stabilisatoren, Flammschutzmittel, Füllstoffe und farbgebende Pigmente zugegeben werden. Die laborgemäße Herstellung der dotierten Kunststoffgranulate erfolgt in der Regel so, dass in einem geeigneten Mischer das Kunststoffgranulat vorgelegt, mit Dispergierhilfen benetzt und danach der Absorber und erforderliche Farbpigmente zugesetzt und untergemischt werden. In der industriellen Praxis erfolgt die Einfärbung und Additivierung des Polymeren in der Regel über ein Farbkonzentrat (Masterbatch) oder Compound. Dazu werden Farbpigmente und Additive unter hoher Scherung in Extrudern (üblicherweise gleichsinnig drehende Doppelschneckenextruder) in dem geschmolzenen Kunststoff dispergiert. Die Kunststoffschmelze tritt durch eine Lochplatte am Extruderkopf aus und wird durch geeignete Folgeeinrichtungen (z.B. Strangabschlagverfahren oder Unterwassergranulierung) zu Granulat verarbeitet. Das so erhaltene Granulat kann direkt in einem Extruder oder einer Spritzgießmaschine weiterverarbeitet werden. Die bei der Verarbeitung gebildeten Formkörper zeigen eine sehr homogene Verteilung des Absorbers. Anschließend findet die Lasermarkierung mit einem geeigneten Laser statt.

Bei farbigen oder dunklen lasermarkierbaren Polymeren bzw. Kunststoffen enthält das Polymer oder der Kunststoff neben dem erfindungsgemäßen Laseradditiv ein oder mehrere Farbmittel. Ohne ein Farbmittel ist der Kunststoff hell und transparent bis opak. Auch ohne Farbmittel werden in Gegenwart des erfindungsgemäßen Laseradditivs helle Markierungen im Polymer erhalten, die dann aber wegen des geringen Kontrastes nur schwer zu erkennen sind.

Die Konzentration des Laseradditivs im Polymeren, vorzugsweise Thermoplasten, Duroplasten, Elastomeren, ist in der Regel abhängig von dem eingesetzten Polymermaterial.

Die Einsatzkonzentration des mit Kupfer dotierten Zinksulfids für die Lasermarkierung beträgt vorzugsweise 0,01 - 1 %, insbesondere 0,05 - 0,5 %, bezogen auf den Kunststoff bzw. das Polymer. Wegen seiner geringen Eigenfarbe und hohen Transparenz des mit Kupfer dotierten Zinksulfids werden die optischen Eigenschaften des markierten Kunststoffs bzw. Polymers nur im geringen Maße durch das Laseradditiv beeinträchtigt. Der geringe Anteil an Laseradditiv verändert das Polymersystem unwesentlich und beeinflusst auch nicht dessen Verarbeitbarkeit.

Unter Einwirkung von Laserlicht zeigt das mit Kupfer dotierte Zinksulfid im Polymer eine helle Markierung mit hohem Kontrast und ausgeprägter Kantenschärfe. Das bei anderen Verfahren zur hellen Markierung auftretende Aufschäumen und die damit einhergehende Aufrauung der Oberfläche wird nicht beobachtet.

Gegenstand der Erfindung ist auch ein Verfahren zur Herstellung der erfindungsgemäßen dotierten polymeren Materialien, dadurch gekennzeichnet, dass ein polymeres Material mit dem Laseradditiv gemischt und dann unter Wärmeeinwirkung verformt wird.

Neben den hervorragenden optischen Eigenschaften, Kontrast und Kantenschärfe, ermöglicht das erfindungsgemäße Laseradditiv schnelle Markierungen mit hohen Pulsraten und verfügt über ein großes Prozessfenster bezogen auf die Lasereinstellungen. Über die Einstellung der Laserparameter lässt sich darüber hinaus die Helligkeit der Markierung bis hin zu dunklen Markierungen gezielt steuern. Allein über die Steuerung der Laserparameter sind detailreiche Halbtonbilder zugänglich. Das Verfahren zur Bilderzeugung ist ebenfalls Gegenstand der Erfindung.

Die Beschriftung des Polymeren mit dem Laser erfolgt derart, dass der Probenkörper in den Strahlengang eines gepulsten Lasers, vorzugsweise eines Nd:YAG-Lasers oder Faserlasers gebracht wird. Ferner ist eine Beschriftung mit einem Excimer-Laser, z.B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im Allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd:YAG-Laser (1064 bzw. 532 nm) oder gepulste UV-Laser erwähnt. Die Excimer-laser weisen folgende Wellenlängen auf: F₂-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm) eingesetzt. Die Energiedichten der eingesetzten Laser liegen im Allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im allgemeinen im Bereich von 1 bis 100 kHz. Entsprechende Laser, die im erfindungsgemäßen Verfahren eingesetzt werden können, sind kommerziell erhältlich.

Das Laserschweißen erfolgt in der Weise, dass ein lasertransparentes Material mit einem laserabsorbierenden Material verschweißt wird. Als laserabsorbierendes Material kann das mit Kupfer dotierte Zinksulfid in Konzentrationen von 0,001 bis 10 Gew.%, vorzugsweise 0,001 bis 7 Gew.% und insbesondere 0,01 bis 3 Gew. %, bezogen auf das Polymer zugesetzt werden. Für das Laserschweißen eignen sich vorzugsweise CW Diodenlaser oder Nd:YAG Laser bei Wellenlängen von 800 - 1100 nm vorzugsweise von 808 - 1080 nm. Die Energiedichten der eingesetzten Laser liegen im Allgemeinen im Bereich von 0,3 mJ/cm² bis 200 J/cm², vorzugsweise 0,5 J/cm² bis 150 J/cm².

Die Verwendung des erfindungsgemäß dotierten Polymeren kann auf allen Gebieten erfolgen, wo bisher übliche Schweißverfahren oder Druckverfahren zur Beschriftung oder zum Fügen von Kunststoffen eingesetzt werden. Beispielsweise können Formmassen, Halbzeuge und Fertigteile aus dem erfindungsgemäßen Polymeren in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäß dotiertem Polymeren bestehen, können selbst an schwer zugänglichen Stellen mit Hilfe von Laserlicht markiert werden. Weiterhin kann das erfindungsgemäße Polymersystem bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind. Komplette Etikettenbilder können dauerhaft auf die Verpackung für ein Mehrwegsystem aufgebracht werden. Weiterhin findet das erfindungsgemäße Polymersystem Anwendung in der Medizintechnik, beispielsweise bei der Markierung von Petrischalen, Microtiterplatten, Einmalspritzen, Ampullen, Probenbehälter, Versorgungsschläuche und medizinische Auffangbeutel bzw. Vorratsbeutel.

Ein weiteres wichtiges Anwendungsgebiet für die Laserbeschriftung sind Kunststoffmarken zur individuellen Kennzeichnung von Tieren, sogenannte Cattle Tags oder Ohrmarken, und von Produkten, sogenannte Sicherheitsplomben. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Die Lasermarkierung von Formmassen, Halbzeugen und Fertigteilen, die aus dem erfindungsgemäßen Polymer bestehen, ist somit möglich.

Die folgenden Beispiele sollen die Erfindung erläutern ohne sie jedoch zu begrenzen. Die angegebenen Prozentangaben sind Gewichtsprozent. Alle Partikelgrößen in dieser Anmeldung werden mittels Laserbeugung (Malvern) bestimmt.

### Beispiele

### Beispiel 1

50 g Zinksulfid der Partikelgröße 0,3 µm (D₅₀) werden in 200 ml Wasser suspendiert. Unter Rühren werden bei Raumtemperatur 100 ml einer Kupfer(II)sulfat-Lösung, die 6,4 g CuSO₄ * 5 H₂O enthält und mit Essigsäure auf pH 4 eingestellt ist, zugetropft. Nach Beendigung der Zugabe wird die Suspension auf 60 °C erwärmt und 1 Stunde nachgerührt. Anschließend wird abfiltriert, mit Wasser gewaschen und das erhaltene Produkt bei 110 °C getrocknet. Das grau-grüne Produkt enthält 5 Mol-% Kupfersulfid bezogen auf die Summe aus Zink- und Kupfersulfid.

1 kg PP-Granulat (Metocene 648T, Fa. Basell) wird mit 2 g Dispergierhilfe (Process-Aid 24, Fa. Colormatrix) im Trommelmischer benetzt. Anschließend werden 5 g des Pigmentes aus Beispiel 1 und 1 g organisches grünes Farbpigment (PV Fast Echtgrün GG01, Fa. Clariant) zugegeben und 2 min im Trommelmischer untergemischt. Die erhaltene Mischung wird im gleichsinnig drehenden Doppelschneckenextruder unter hoher Scherung bei 250-260 °C Manteltemperatur compoundiert, durch eine Lochdüse zu einem Strang geformt, im Wasserbad abgekühlt und durch ein rotierendes Messer granuliert. Der erhaltene Compound wird bei 100 °C 1h getrocknet und auf einer Spritzgussmaschine zu Plättchen mit den Abmessungen 60 mm x 90 mm x 1,5 mm (B x H x T) verarbeitet. Die Kunststoffplättchen werden anschließend mit einem gepulsten YVO₄-Laser mit 1064 nm Wellenlänge und einer maximalen Ausgangsleistung von 10,5 W lasermarkiert. Das Testraster variiert die Geschwindigkeit zwischen 500 und 5000 mm/s und die Frequenz zwischen 20 und 100 kHz. Es werden gefüllte Flächen mit einem Linienabstand von 50 µm und darüber hinaus Linienschrift gelasert. Es werden stabile helle Lasermarkierungen bis zu einer Geschwindigkeit von 3000 mm/s erhalten. Die Linienmarkierung ist sehr definiert und detailgetreu und bestätigt die homogene Verteilung des Additivs im Kunststoff.

### Beispiel 2

12,8 g CuSO₄ × 5 H₂O werden in 500 ml H₂O gelöst und der pH-Wert mit Essigsäure auf 4 eingestellt. Zu der Lösung werden unter starkem Rühren bei Raumtemperatur 50 g Talkum Plustalc H05AW, Mondo Minerals, eingerührt und anschließend 50 g Zinksulfid-Pulver (Teilchengröße: D₅₀ = 0,3 µm) unter Rühren eingetragen. Die Suspension wird 30 Minuten bei Raumtemperatur und weitere 60 Minuten bei 60 °C gerührt. Nach Filtration und Waschen wird das Produkt bei 110 °C getrocknet und zum Schluss in einem Planetenmahlwerk feinst (D₅₀ ≤ 1000 nm) pulverisiert. Der Anteil an Kupfersulfid beträgt 10 Mol-% bezogen auf die Summe Kupfersulfid und Zinksulfid. Die Farbe des Pulvers ist ein helles Olivgrün.

Das erhaltene Pigmentpulver wird analog zu Beispiel 1 in Polypropylen eingearbeitet. Es werden die gleichen Einwaagen und ebenfalls das grüne Farbpigment verwendet. Die Belaserung unter gleichen Bedingungen ergibt ebenfalls stabile helle Lasermarkierungen bis zu einer Geschwindigkeit von 3000 mm/s. Die Linienmarkierung ist sehr definiert und detailgetreu und bestätigt auch in Beispiel 2 die homogene Verteilung des Laseradditivs im Kunststoff.

### Beispiel 3

5,4 g CuSO₄ × 5 H₂O werden in 500 ml H₂O gelöst. Anschließend werden bei Raumtemperatur unter Rühren 100 g Zinksulfid-Pulver (Teilchengröße: D₅₀ = 0,3 µm) eingetragen. Es wird ein pH-Wert von 4,5 eingestellt. Die Suspension wird 30 Minuten bei Raumtemperatur und anschließend weitere 60 Minuten bei 60 °C gerührt. Danach wird der Feststoff abfiltriert, gewaschen und bei 110 °C getrocknet. Man erhält ein helles graugrünes Pulver. Der Kupfersulfid-Anteil beträgt 2 Mol-% bezogen auf die Summe aus Zinksulfid und Kupfersulfid.

Die Mischung wird analog zu Beispiel 1 zunächst zu Compound und anschließend zu Plättchen weiterverarbeitet. Die Plättchen werden anschließend mit dem Testraster entsprechend Beispiel 1 lasermarkiert. Das erhaltene Pigmentpulver wird analog zu Beispiel 1 in Polypropylen eingearbeitet. Es werden die gleichen Einwaagen und ebenfalls das grüne Farbpigment verwendet. Die Belaserung unter gleichen Bedingungen ergibt ebenfalls stabile helle Lasermarkierungen bis zu einer Geschwindigkeit von 2000 mm/s. Die Linienmarkierung ist sehr definiert und detailgetreu und bestätigt auch in Beispiel 3 die homogene Verteilung des Laseradditivs im Kunststoff.

### Beispiel 4 (Laserschweißen):

Zur Überprüfung der Laserverschweißung werden Kunststoffplättchen aus dem Beispiel 1 genutzt. Die Plättchen bilden als laserabsorbierendes Material die Unterseite des zu verschweißenden Elementes. Die Oberseite besteht aus einem lasertransparenten Plättchen aus reinem Polypropylen (Metocene 648T, Fa. Basell). Das lasertransparente Plättchen hat ebenfalls die Abmessungen 60 mm x 90 mm x 1,5 mm (B x H x T) und wird unter gleichen Bedingungen wie im Beispiel 1 auf einer Spritzgussmaschine hergestellt. Zur Überprüfung der Verschweißbarkeit wird wiederum der 1064 nm-Laser (Trumpf-Vectormark 5, 10,5 W maximale Ausgangsleistung) verwendet, nur dieses Mal im continious wave (cw)-Modus, d.h. ungepulst. Dabei wird der Laserstrahl so eingestellt, dass der Fokus 4 mm unter der Oberfläche des unteren laserabsorbierenden Plättchens liegt. Auf dem laserabsorbierenden Plättchen, welches das kupferdotierte ZnS enthält, liegt das lasertransparente Plättchen, welches zusätzlich durch Magneten an den Rändern fixiert wird. Es wird die maximale Laserleistung (100 %) eingestellt. Die Geschwindigkeit des Laserstrahls beträgt 200 mm/s. Es werden nacheinander 1000 parallele Linien mit einer Länge von 1 mm und einem Abstand von 50 µm gelasert. Mit einer Fortschritt von 10 mm/s entsteht somit eine Schweißnaht von 1 mm Breite. Die Schweißnaht ist sauber ausgebildet und beide Teile sind fest verbunden.

## Patentansprüche

1. Lasermarkierbare und/oder laserschweißbare Polymere, **dadurch gekennzeichnet, dass** sie als Absorber mindestens ein mit Kupfer dotiertes Zinksulfid enthalten, wobei der Gehalt an Kupfer im Zinksulfid 0,5 - 15 Mol-% bezogen auf die Summe von Kupfersulfid und Zinksulfid beträgt.

2. Lasermarkierbare und/oder laserschweißbare Polymere nach Anspruch 1, **dadurch gekennzeichnet, dass** der Gehalt an Kupfer im Zinksulfid 1 - 6 Mol-% bezogen auf die Summe von Kupfersulfid und Zinksulfid beträgt.

3. Lasermarkierbare und/oder laserschweißbare Polymere nach Anspruch 1 oder 2, **dadurch gekennzeichnet, dass** das mit Kupfer dotierte Zinksulfid eine Partikelgröße von 20 - 1000 nm, gemessen mittels Laserbeugung (Malvern), aufweist.

4. Lasermarkierbare und/oder laserschweißbare Polymere nach einem oder mehreren der Ansprüche 1 bis 3, **dadurch gekennzeichnet, dass** das mit Kupfer dotierte Zinksulfid auf einem anorganischen Träger aufgebracht ist.

5. Lasermarkierbare und/oder laserschweißbare Polymere nach einem oder mehreren der Ansprüche 1 bis 4, **dadurch gekennzeichnet, dass** das mit Kupfer dotierte Zinksulfid zusätzlich mit einer Zinksulfid-Schicht auf der Oberfläche versehen ist.

6. Lasermarkierbare und/oder laserschweißbare Polymere nach einem oder mehreren der Ansprüche 1 bis 5, **dadurch gekennzeichnet, dass** das mit Kupfer dotierte Zinksulfid zusätzlich eine organische Nachbeschichtung aufweist.

7. Lasermarkierbare und/oder laserschweißbare Polymere nach einem oder mehreren der Ansprüche 1 bis 6, **dadurch gekennzeichnet, dass** das Laseradditiv in Konzentrationen von 0,01 bis 1 Gew.% bezogen auf das Polymer eingesetzt wird.

8. Lasermarkierbare und/oder laserschweißbare Polymere nach einem oder mehreren der Ansprüche 1 bis 7, **dadurch gekennzeichnet, dass** das Polymer ein Thermoplast, Duroplast oder Elastomer ist.

9. Lasermarkierbare und/oder laserschweißbare Polymere nach einem oder mehreren der Ansprüche 1 bis 8, **dadurch gekennzeichnet, dass** das Polymer zusätzlich ein oder mehrere Farbpigmente und/oder Farbstoffe enthält.

10. Verfahren zur Herstellung von lasermarkierbaren und/oder laserschweißbaren Polymeren nach einem oder mehreren der Ansprüche 1 bis 9, **dadurch gekennzeichnet, dass** die Zugabe des mit Kupfer dotierten Zinksulfid durch Compoundierung, über ein Masterbatch oder über Pasten oder durch die direkte Zugabe dem Polymer gleichzeitig oder nacheinander erfolgt und gegebenenfalls ein oder mehrere Additive zugesetzt werden und dann das Polymer unter Wärmewirkung verformt wird.

11. Verwendung der lasermarkierbaren und/oder laserschweißbaren Polymere nach einem oder mehreren der Ansprüche 1 bis 9 als Material zur Herstellung von Formmassen, Halbzeugen, Fertigteilen und zur Bilderzeugung.

12. Formmassen, Halbzeuge und Fertigteile bestehend aus dem lasermarkierbaren und laserschweißbaren Polymer nach einem oder mehreren der Ansprüche 1 bis 9.

## Claims

1. Laser-markable and/or laser-weldable polymers, **characterised in that** they comprise, as absorber, at least one copper-doped zinc sulfide, where the copper content in the zinc sulfide is 0.5 - 15 mol%, based on the sum of copper sulfide and zinc sulfide.

2. Laser-markable and/or laser-weldable polymers according to Claim 1, **characterised in that** the copper content in the zinc sulfide is 1 - 6 mol%, based on the sum of copper sulfide and zinc sulfide.

3. Laser-markable and/or laser-weldable polymers according to Claim 1 or 2, **characterised in that** the copper-doped zinc sulfide has a particle size of 20 - 1000 nm, measured by means of laser diffraction (Malvern).

4. Laser-markable and/or laser-weldable polymers according to one or more of Claims 1 to 3, **characterised in that** the copper-doped zinc sulfide is applied to an inorganic support.

5. Laser-markable and/or laser-weldable polymers according to one or more of Claims 1 to 4, **characterised in that** the copper-doped zinc sulfide is additionally provided on the surface with a zinc sulfide layer.

6. Laser-markable and/or laser-weldable polymers according to one or more of Claims 1 to 5, **characterised in that** the copper-doped zinc sulfide additionally has an organic post-coating.

7. Laser-markable and/or laser-weldable polymers according to one or more of Claims 1 to 6, **characterised in that** the laser additive is employed in concentrations of 0.01 to 1% by weight, based on the polymer.

8. Laser-markable and/or laser-weldable polymers according to one or more of Claims 1 to 7, **characterised in that** the polymer is a thermoplastic, thermoset or elastomer.

9. Laser-markable and/or laser-weldable polymers according to one or more of Claims 1 to 8, **characterised in that** the polymer additionally comprises one or more coloured pigments and/or dyes.

10. Process for the preparation of laser-markable and/or laser-weldable polymers according to one or more of Claims 1 to 9, **characterised in that** the addition of the copper-doped zinc sulfide is carried out simultaneously or successively by compounding, via a masterbatch or via pastes or by direct addition to the polymer, and one or more additives are optionally added and the polymer is then shaped under the action of heat.

11. Use of the laser-markable and/or laser-weldable polymers according to one or more of Claims 1 to 9 as material for the production of moulding compositions, semi-finished products, finished parts and for imaging.

12. Moulding compositions, semi-finished products and finished parts consisting of the laser-markable and laser-weldable polymer according to one or more of Claims 1 to 9.

## Revendications

1. Polymères pouvant être marqués au laser et/ou soudés au laser, **caractérisés en ce qu'**ils comprennent, en tant qu'absorbeur, au moins un sulfure de zinc dopé au cuivre, dans lequel la teneur en cuivre dans le sulfure de zinc est de 0,5 % (pourcentage molaire) à 15 % (pourcentage molaire), sur la base de la somme du sulfure de cuivre et du sulfure de zinc.

2. Polymères pouvant être marqués au laser et/ou soudés au laser selon la revendication 1, **caractérisés en ce que** la teneur en cuivre dans le sulfure de zinc est de 1 % (pourcentage molaire) à 6 % (pourcentage molaire), sur la base de la somme du sulfure de cuivre et du sulfure de zinc.

3. Polymères pouvant être marqués au laser et/ou soudés au laser selon la revendication 1 ou 2, **caractérisés en ce que** le sulfure de zinc dopé au cuivre présente une taille de particule de 20 nm à 1000 nm, mesurée au moyen d'une diffraction laser (Malvern).

4. Polymères pouvant être marqués au laser et/ou soudés au laser selon une ou plusieurs des revendications 1 à 3, **caractérisés en ce que** le sulfure de zinc dopé au cuivre est appliqué sur un support inorganique.

5. Polymères pouvant être marqués au laser et/ou soudés au laser selon une ou plusieurs des revendications 1 à 4, **caractérisés en ce que** le sulfure de zinc dopé au cuivre est de façon additionnelle appliqué sur la surface avec une couche de sulfure de zinc.

6. Polymères pouvant être marqués au laser et/ou soudés au laser selon une ou plusieurs des revendications 1 à 5, **caractérisés en ce que** le sulfure de zinc dopé au cuivre comporte de façon additionnelle un post-revêtement organique.

7. Polymères pouvant être marqués au laser et/ou soudés au laser selon une ou plusieurs des revendications 1 à 6, **caractérisés en ce que** l'additif laser est utilisé selon des concentrations de 0,01 % à 1 % en poids, sur la base du polymère.

8. Polymères pouvant être marqués au laser et/ou soudés au laser selon une ou plusieurs des revendications 1 à 7, **caractérisés en ce que** le polymère est une matière thermoplastique, une matière thermo-durcie ou un élastomère.

9. Polymères pouvant être marqués au laser et/ou soudés au laser selon une ou plusieurs des revendications 1 à 8, **caractérisés en ce que** le polymère comprend de façon additionnelle un ou plusieurs pigment(s) coloré(s) et/ou colorant(s).

10. Procédé pour la préparation de polymères pouvant être marqués au laser et/ou soudés au laser selon une ou plusieurs des revendications 1 à 9, **caractérisé en ce que** l'ajout du sulfure de zinc dopé au cuivre est mis en oeuvre simultanément ou successivement par mélange, via un mélange maître ou via des pâtes ou au moyen d'un ajout direct au polymère, et un ou plusieurs additif(s) est/sont en option ajouté(s) et le polymère est ensuite conformé sous l'action de la chaleur.

11. Utilisation des polymères pouvant être marqués au laser et/ou soudés au laser selon une ou plusieurs des revendications 1 à 9 en tant que matériau pour la fabrication de compositions de moulage, de produits semi-finis, de pièces finies et pour l'imagerie.

12. Compositions de moulage, produits semi-finis et pièces finies constitués par le polymère pouvant être marqué au laser et/ou soudé au laser selon une ou plusieurs des revendications 1 à 9.
